# FASCICULE DE BREVET EUROPEEN

(11) **EP 4 263 257 B1**
(45) Date de publication et mention de la délivrance du brevet: **17.12.2025**
(21) Numéro de dépôt: 21815503.4
(22) Date de dépôt: 21.11.2021
(51) Int. Cl.: B60K 11/08

(54) **DISPOSITIF D'OBTURATION DE FLUX D'AIR DE FACE AVANT DE VEHICULE AUTOMOBILE**
VERSCHLUSSVORRICHTUNG ZUM ABSPERREN DES LUFTSTROMS IN DER FRONTBLENDE EINES KRAFTFAHRZEUGS
CLOSURE DEVICE FOR CLOSING OFF AIR FLOW IN THE FRONT PANEL OF A MOTOR VEHICLE

(30) Priorité: 18.12.2020 FR 2013715
(43) Date de publication de la demande: 25.10.2023
(73) Titulaire: VALEO SYSTEMES THERMIQUES, 78320 Le Mesnil Saint-Denis (FR)
(72) Inventeur: KUMAR, Vijendra, Chennai, 600130 (IN); VELASCO, Sebastien, Chennai, 600130 (IN); SZEGENY, Vladimir, 108 00 Prague (CZ); VACCA, Frederic, 78322 Le Mesnil-Saint-Denis Cedex (FR)
(74) Mandataire: Valeo Powertrain Systems
(86) Numéro de dépôt international: PCT/EP2021/082389
(87) Numéro de publication internationale: WO 2022/128334

(56) Documents cités:
- WO-A1-2019/020510
- DE-A1- 102014 207 566
- DE-A1- 102017 107 384
- DE-A1- 102018 201 469
- US-A1- 2006 279 276

## Description

La présente invention se rapporte au domaine des dispositifs d'obturation de flux d'air de face avant de véhicule automobile, et plus précisément à un système de fixation des volets.

Les faces avants de véhicules automobiles comportent généralement une ou plusieurs entrées d'air principales par lesquelles un flux d'air entre en direction du compartiment avant du véhicule automobile. Derrière ces entrées d'air, sont généralement placés des échangeurs de chaleur du véhicule automobile, comme par exemple celui utilisé pour la climatisation de l'habitacle et/ou encore celui utilisé pour le refroidissement du moteur.

Il est également connu de disposer, dans le trajet d'air passant par les entrées d'air principales, un cadre support comportant un ou plusieurs volets montés pivotants et propres à prendre une multiplicité de positions angulaires différentes, comprises entre une position d'ouverture et une position d'obturation et formant ainsi un dispositif d'obturation s'apparentant à une jalousie. Ce dispositif d'obturation est parfois appelé obturateur actif de calandre, ou encore module d'entrée d'air piloté. Un tel dispositif d'obturation peut également être désigné par l'acronyme AGS (pour « Active Grille Shutter » en anglais).

Le dispositif d'obturation permet d'ajuster le débit d'air traversant les entrées d'air et arrivant aux échangeurs de chaleur. Il est ainsi possible d'optimiser l'efficacité de ces échangeurs de chaleur en fonction des besoins en faisant varier la quantité d'air qu'ils reçoivent. De plus, à grande vitesse, les volets en position d'obturation permettent de diminuer le coefficient de traînée du véhicule automobile et ainsi améliorent l'aérodynamisme dudit véhicule automobile. Le dispositif d'obturation permet donc de réduire la consommation d'énergie et la pollution lorsque le moteur n'a pas besoin d'être refroidi par l'air extérieur.

Les volets sont généralement mis en rotation par un ou plusieurs actionneurs électriques. Ces actionneurs électriques doivent être connectés à d'autres éléments notamment électriques afin de contrôler leur rotation et d'être alimentés en électricité. Cependant la connexion avec de tels éléments peut être complexe notamment lors du montage du dispositif d'obturation dans le véhicule. De plus, il est nécessaire de prévoir au sein du véhicule des emplacements dédiés pour ces éléments

De tels exemples de dispositifs d'obturation de véhicule sont connus de DE102014207566A1, WO2019/020510A1 et de US2006/279276A1.

Un des buts de la présente invention est donc de remédier au moins partiellement aux inconvénients de l'art antérieur et de proposer un dispositif d'obturation avec une connexion et un montage améliorés.

La présente invention concerne donc un dispositif d'obturation pour entrée d'air de face avant de véhicule automobile comprenant :
- au moins un cadre support présentant deux montants latéraux reliant deux traverses d'extrémité, ledit cadre support délimitant une ouverture,
- au moins un volet disposé au sein de l'ouverture du au moins un cadre support et pivotant autour d'un axe de pivotement entre une première position extrémale ouverte et une deuxième position extrémale fermée, ledit au moins un volet étant mis en rotation par au moins dispositif d'entraînement comportant un actionneur électrique,
ledit dispositif d'obturation comportant un module de contrôle fixé sur l'au moins un cadre support, ledit module de contrôle étant connecté électriquement d'une part à l'au moins un actionneur électrique et d'autre part à une source électrique.

Selon un aspect de l'invention, l'au moins un actionneur électrique et le module de contrôle sont fixés sur un même côté du au moins un cadre support.

Selon un autre aspect de l'invention, l'au moins un actionneur électrique et le module de contrôle sont fixés sur un montant latéral.

Selon l'invention, le dispositif d'obturation comporte un premier et un deuxième cadre support, ledit premier et ledit deuxième cadre support comportant chacun un actionneur électrique propre, et ledit module de contrôle du dispositif d'obturation est un unique module de contrôle connecté électriquement d'une part à chaque actionneur électrique et d'autre part à une source électrique.

Selon un autre aspect de l'invention, l'au moins un cadre support comporte des parois faisant saillies dudit au moins un cadre support et délimitant un logement de réception du module de contrôle.

Selon un autre aspect de l'invention, les parois comportent des encoches de passage de câbles électriques.

Selon un autre aspect de l'invention, les parois comportent des renflements chevauchant le module de contrôle de sorte à maintenir ledit module de contrôle au sein du logement de réception.

Selon un autre aspect de l'invention, le module de contrôle est vissé sur l'au moins un cadre support.

Selon un autre aspect de l'invention, l'au moins un cadre support comporte des guides de passage et de maintien de câbles électriques.

Selon un autre aspect de l'invention, le module de contrôle est un convertisseur de puissance, ou un onduleur ou encore une unité de contrôle.

D'autres caractéristiques et avantages de la présente invention apparaîtront plus clairement à la lecture de la description suivante, fournie à titre illustratif et non limitatif, et des dessins annexés dans lesquels :
[Fig 1] La figure 1 montre une représentation schématique en perspective de la face avant d'un dispositif d'obturation selon un premier mode de réalisation,
[Fig 2] la figure 2 montre une représentation schématique en perspective de la face arrière d'un dispositif d'obturation selon le premier mode de réalisation,
[Fig 3] la figure 3 montre une représentation schématique en perspective de la face avant d'un dispositif d'obturation selon un deuxième mode de réalisation,
[Fig 4] la figure 4 montre une représentation schématique d'un logement de réception vide d'un cadre support,
[Fig 5] la figure 5 montre une représentation schématique du logement de réception de la figure 4 avec un module de réception,

Sur ces figures, les éléments identiques portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou inter-changées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément inter-changer de telles dénominations sans sortir du cadre de la présente description. Cette indexation n'implique pas non plus un ordre dans le temps par exemple pour apprécier tel ou tel critère.

Dans la description suivante, on entend par « supérieur » et « inférieur », la disposition des éléments sur le dispositif d'obturation d'entrée d'air de face avant à l'état monté du dispositif d'obturation sur le véhicule automobile.

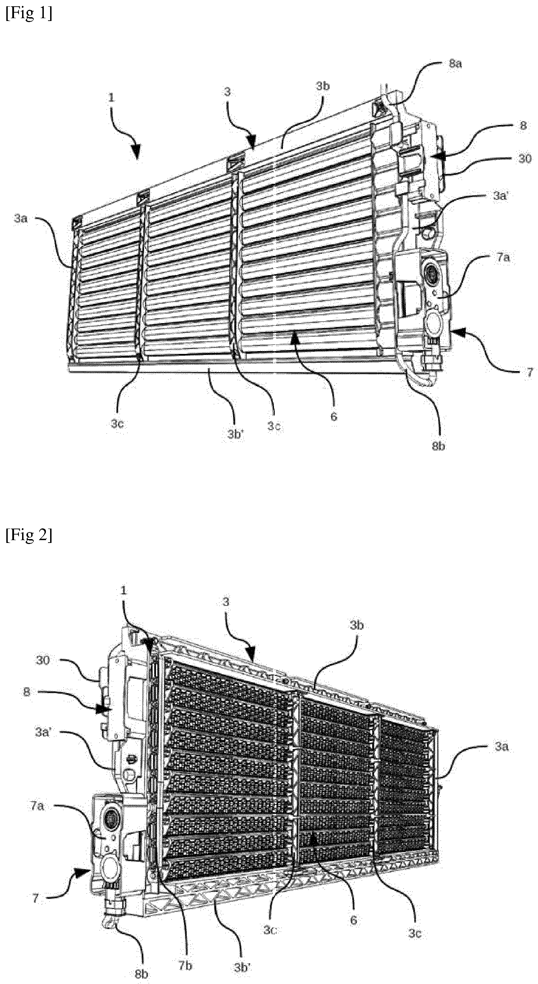

Les figures 1 et 2 montrent respectivement la face avant et la face arrière d'un dispositif d'obturation 1 pour entrée d'air de face avant de véhicule automobile selon un premier mode de réalisation. Par face avant, on entend ici la face du dispositif d'obturation 1 destinée à être orientée vers l'avant du véhicule automobile. Par face arrière, on entend ici la face du dispositif d'obturation 1 opposée à la face avant et destinée à être orientée vers l'arrière du véhicule automobile.

Dans ce premier mode de réalisation, le dispositif d'obturation 1 comprend un cadre support 3 comportant deux montants latéraux 3a, 3a' et deux traverses d'extrémité 3b, 3b' reliant les deux montants latéraux 3a, 3a' entre eux, définissant ainsi une ouverture du cadre support 3. Le cadre support 3 a alors une forme générale rectangulaire. Plus particulièrement, le cadre support 3 présente une traverse d'extrémité supérieure 3b et une traverse d'extrémité inférieure 3b', ces orientations correspondant arbitrairement à la disposition du dispositif d'obturation 1 à l'état monté dans le véhicule automobile. La traverse d'extrémité supérieure 3b sera alors disposée en regard du haut du véhicule automobile et la traverse d'extrémité inférieure 3b' sera, quant à, elle disposée en regard du bas du véhicule automobile.

Le cadre support 3 peut également comporter au moins un montant intermédiaire 3c parallèle aux montants latéraux 3a, 3a' et reliant les traverses d'extrémité 3b, 3b'. Ce montant intermédiaire 3c relie plus particulièrement la traverse d'extrémité supérieure 3b à la traverse d'extrémité inférieure 3b' au sein de l'ouverture du cadre support 3. Dans l'exemple présenté aux figures 1 et 2, l'ouverture du cadre support 3 est divisée en trois par deux montants intermédiaires 3c.

Le cadre support 3 présente au moins un volet 6 disposé à l'intérieur de son ouverture. Le ou les volets 6 sont montés pivotant autour d'un axe de pivotement entre une première position extrémale ouverte (non représentée) et une deuxième position extrémale fermée (visible sur les figures 1 et 2). Lorsque le ou les volets 6 occupent leur première position extrémale ouverte, le flux d'air peut passer au travers de l'ouverture du cadre support 3. Lorsque le ou les volets 6 occupent leur deuxième position extrémale fermée, le ou les volets 6 obstruent l'ouverture du cadre support 3 et s'oppose au passage du flux d'air.

Toujours dans l'exemple illustré aux figures 1 et 2, le cadre support 3 comporte une pluralité de volets 6 formant au moins un ensemble de volets 6 disposés parallèlement les uns aux autres sur un même plan et qui sont adjacents. Dans le cas présent, le cadre support 3 comporte un unique ensemble de volets 6 disposé dans l'ouverture du cadre support 3. Les volets 6 sont notamment disposés horizontalement et les uns au-dessus des autres, parallèlement aux traverses d'extrémité 3b, 3b'. Les volets 6 forment alors une liaison pivot avec les montants latéraux 3a, 3a'. Les montants intermédiaires 3c ont ici un rôle de soutien afin que les volets 6 restent droits et ne ploient pas sous leur propre poids. Les volets 6 forment ainsi également une liaison pivot avec ces montants intermédiaires 3c.

De plus, le cadre support 3 présente au moins un dispositif d'entraînement 7 configuré pour piloter le positionnement, et donc le pivotement, du ou des volets 6 entre leur première position extrémale ouverte et leur deuxième position extrémale fermée.

Le dispositif d'entraînement 7 comporte notamment un actionneur électrique 7a, par exemple un moteur électrique, et un organe de commande 7b (visibles à la figure 2). Dans l'exemple illustré aux figures 1 et 2, l'actionneur électrique 7a est relié directement à l'organe de commande 7b, par exemple une bielle, par un levier (non visible). L'organe de commande 7b est quant à lui relié à chaque volet 6. Une rotation de l'actionneur électrique 7a fait alors translater l'organe de commande 7b afin de faire pivoter simultanément le ou les volets 6. D'autres modes de transmission des mouvements de rotation de l'actionneur électrique 7a à l'ensemble de volets 6 peuvent tout à fait être imaginés.

Dans l'exemple illustré aux figures 1 et 2, le dispositif d'entraînement 7 est disposé sur un des montants latéraux 3a, 3a' du cadre support 3 afin de pouvoir entraîner en pivotement le ou les volets 6 simultanément.

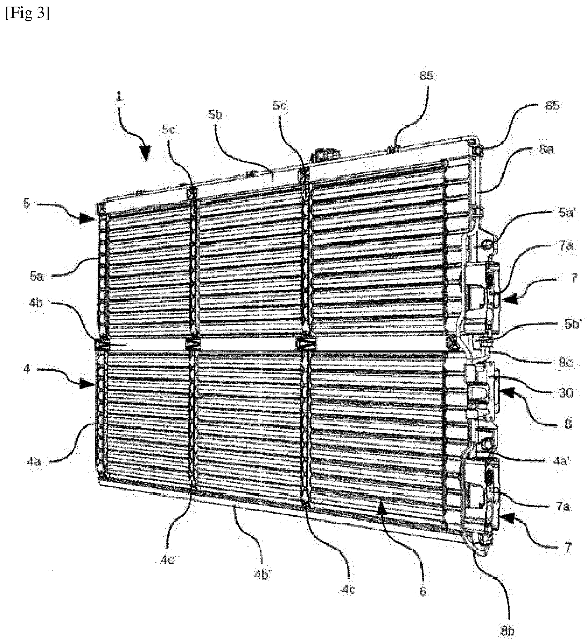

Selon un deuxième mode de réalisation illustré à la figure 3, le dispositif d'obturation 1 peut comprendre un premier 4 et un deuxième 5 cadre support. Ces premier 4 et deuxième 5 cadres supports sont identiques au cadre de support 3 du premier mode de réalisation et comportent deux montants latéraux 4a, 4a', 5a, 5a' et deux traverses d'extrémité 4b, 4b', 5b, 5b' reliant les deux montants latéraux 4a, 4a', 5a, 5a' entre eux, définissant ainsi une ouverture pour chacun des premier 4 et deuxième 5 cadres supports.

Toujours comme le cadre support 3 du premier mode de réalisation, les premier 4 et deuxième 5 cadres supports du deuxième mode de réalisation peuvent également comporter au moins un montant intermédiaire 4c, 5c parallèle à leurs montants latéraux 4a, 4a', 5a, 5a' et reliant leurs traverses d'extrémité 4b, 4b', 5b, 5b'.

Les premier 4 et deuxième 5 cadres supports présentent chacun au moins un volet 6 disposé à l'intérieur de leur ouverture. Le ou les volets 6 sont montés pivotant autour d'un axe de pivotement entre une première position extrémale ouverte (non représentée) et une deuxième position extrémale fermée (visible sur la figure 3). Lorsque le ou les volets 6 occupent leur première position extrémale ouverte, le flux d'air peut passer au travers de l'ouverture du premier cadre support 4 et du deuxième cadre support 5. Lorsque le ou les volets 6 occupent leur deuxième position extrémale fermée, le ou les volets 6 obstruent l'ouverture du premier cadre support 4 et du deuxième cadre support 5 et s'oppose au passage du flux d'air.

Dans l'exemple illustré à la figure 3, les premier 4 et deuxième 5 cadres supports comportent chacun une pluralité de volets 6 formant au moins un ensemble de volets 6 disposés parallèlement les uns aux autres sur un même plan et qui sont adjacents. Dans le cas présent, chacun des premier 4 et deuxième 5 cadres supports comporte un unique ensemble de volets 6 disposé dans l'ouverture du premier cadre support 3. Les volets 6 sont notamment disposés horizontalement et les uns au-dessus des autres, parallèlement aux traverses d'extrémité 4b, 4b', 5b, 5b'. Les volets 6 forment alors une liaison pivot avec les montants latéraux 4a, 4a', 5a, 5a'. Les montants intermédiaires 4c, 5c ont ici un rôle de soutien afin que les volets 6 restent droits et ne ploient pas sous leur propre poids. Les volets 6 forment ainsi également une liaison pivot avec ces montants intermédiaires 4c, 5c.

Le premier 4 et le deuxième 5 cadre support comportent chacun au moins un dispositif d'entraînement 7 dédié à la mise en mouvement du ou des volets 6 que chacun desdits premier 4 et deuxième 5 cadres supports comportent. Ces dispositifs d'entraînement 7 (visible sur la figure 3) sont identiques au dispositif d'entraînement 7 du cadre support 3 du premier mode de réalisation. Ces dispositifs d'entraînement 7 sont ainsi configurés pour piloter le positionnement, et le pivotement, du ou des volets 6 entre leur première position extrémale ouverte et leur deuxième position extrémale fermée.

Comme le montre la figure 3, le premier 4 et le deuxième 5 cadre support sont fixés directement l'un à l'autre au niveau d'un de leurs côtés. Cette fixation directe des premier 4 et deuxième 5 cadres supports l'un à l'autre permet une mise en place simplifiée du dispositif d'obturation 1 au sein du véhicule automobile. L'utilisation de deux cadres supports 4 et 5 fixés directement l'un à l'autre est également particulièrement intéressant pour des dispositifs d'obturation 1 de grande taille, par exemple pour des véhicules tels que des camions. En effet, une telle conformation permet de limiter les risques de déformation ou de casse des volets 6 du fait de la grande taille du dispositif d'obturation 1 et de la pression de l'air. De plus, le fait que chaque cadre support 4, 5 comporte un dispositif d'entraînement 7 dédié permet de simplifier les branchements et connexions lors de cette mise en place.

Le premier 4 et le deuxième 5 cadres supports sont de préférence fixés l'un au-dessus de l'autre. Par-là, on entend que la traverse d'extrémité inférieure 5b' du deuxième cadre support 5 est fixée directement à la traverse d'extrémité supérieure 4b du premier cadre support 4. Cela permet notamment de placer chaque cadre support 4 et 5 respectivement en regard d'une entrée d'air inférieure et une entrée d'air supérieure de la face avant du véhicule automobile.

Plus particulièrement, les côtés par lesquels les premier 4 et deuxième 5 cadres supports sont fixés l'un à l'autre, peuvent avoir une forme complémentaire. Plus précisément ici, la traverse d'extrémité inférieure 5b' du deuxième cadre support 5 et la traverse d'extrémité supérieure 4b du premier cadre support 4 sont emboîtées l'une dans l'autre. Cette complémentarité de forme permet notamment que les premier 4 et deuxième 5 cadres supports soient bien ajustés l'un par rapport à l'autre et permet également une mise en place aisée.

Selon l'exemple illustré à la figure 3, le dispositif d'entraînement 7 est disposé sur un des montants latéraux 4a, 4a', 5a, 5a' des premier 4 et deuxième 5 cadres supports afin de pouvoir entraîner en pivotement le ou les volets 6 simultanément. Plus précisément, les dispositifs d'entraînement 7 sont disposés sur un même côté des premier 4 et deuxième 5 cadres supports.

Le fait d'utiliser des dispositifs d'entraînement 7 dédiés pour le premier 4 et le deuxième 5 cadre support, permet de piloter individuellement le ou les volets 6 de chaque cadre support 4 et 5. Cela peut être particulièrement avantageux afin de limiter le flux d'air traversant le dispositif d'obturation 1, par exemple, lors d'un déplacement du véhicule. Cela permet ainsi potentiellement d'améliorer le coefficient aérodynamique et donc la consommation du véhicule tout en permettant à un flux d'air de traverser l'un des cadres supports 3 ou 4 pour atteindre les échangeurs de chaleurs disposés en aval du dispositif d'obturation 1.

Le dispositif d'obturation 1 comporte en outre un module de contrôle 8 fixé sur l'au moins un cadre support 3, 4, 5. Le module de contrôle 8 peut par exemple être vissé sur l'au moins un cadre support 3, 4, 5.

Ce module de contrôle 8 est connecté électriquement d'une part à l'au moins un actionneur électrique 7a et d'autre part à une source électrique. Le fait que ce module de contrôle 8 soit directement fixé sur l'au moins un cadre support 3, 4, 5 permet un montage plus aisé du dispositif d'obturation 1 ainsi qu'un branchement des actionneurs électrique 7a plus aisé. En effet, les actionneurs électrique 7a sont ainsi déjà connectés au module de contrôle 8 et seul ce dernier reste à connecter lors du montage du dispositif d'obturation 1 dans le véhicule automobile. De plus, l'incorporation du module de contrôle 8 directement sur le dispositif d'obturation 1 permet une intégration plus aisée dudit module de contrôle 8 au sein du véhicule. Tout est regroupé au sein du dispositif d'obturation 1.

Le module de contrôle 8 peut être par exemple un convertisseur de puissance afin de convertir la tension d'alimentation électrique en provenance du circuit électrique du véhicule vers une tension adaptée pour le ou les actionneurs électrique 7a. Un tel convertisseur de puissance peut par exemple permettre de passer d'une tension de 24V vers une tension de 12V. Le module de contrôle 8 peut être également un onduleur permettant par exemple le passage d'un courant continu vers un courant alternatif adapté pour le ou les actionneurs électrique 7a. Le module de contrôle 8 peut en outre être une unité de contrôle par exemple pour contrôler la rotation du ou des actionneurs électriques 7a et ainsi contrôler l'ouverture et la position des volets 6.

Comme illustré sur les figure 1 à 3, l'au moins un actionneur électrique 7a et le module de contrôle 8 peuvent notamment être fixés sur un même côté du au moins un cadre support 3, 4, 5. Plus précisément, l'au moins un actionneur électrique 7a et le module de contrôle 8 sont fixés sur un montant latéral 3a, 3a', 4a, 4a', 5a, 5a'. Cette disposition particulière permet notamment que le module de contrôle 8 soit proche du ou des actionneurs électrique 7a afin de limiter la longueur des câbles électriques 8b, 8c reliant le module de contrôle 8 et le ou les actionneurs électriques 7a.

Selon le premier mode de réalisation illustré aux figures 1 et 2, le dispositif d'obturation ne comporte qu'un seul cadre support 3 et un seul actionneur électrique 7a. Le module de contrôle 8 est alors relié par un câble électrique 8b audit actionneur électrique 7a. Le module de contrôle 8 comporte un autre câble électrique 8a permettant la connexion du module de contrôle 8 à une source électrique, par exemple au circuit électrique du véhicule automobile pour son alimentation.

Selon le deuxième mode de réalisation illustré à la figure 3, le dispositif d'obturation 1 comporte un premier 4 et un deuxième 5 cadre support chacun avec un actionneur électrique 7a propre. Le dispositif d'obturation 1 comporte ici un unique module de contrôle 8 étant connecté électriquement d'une part chaque actionneur électrique 7a et d'autre part à une source électrique. Lorsque les actionneurs électrique 7a du premier 4 et du deuxième 5 cadre support sont disposés sur un même côté des premier 4 et deuxième 5 cadres supports, avantageusement le module de contrôle 8 est disposé entre lesdits actionneurs électrique 7a. Le module de contrôle 8 est alors relié par un câble électrique 8b à l'actionneur électrique 7a du premier cadre support 4 et par un autre câble électrique 8c à l'actionneur électrique 7a du deuxième cadre support 5. Le module de contrôle 8 comporte un également un câble électrique 8a supplémentaire permettant la connexion du module de contrôle 8 à une source électrique, par exemple au circuit électrique du véhicule automobile pour son alimentation.

Le dispositif d'obturation 1 et plus particulièrement l'au moins un cadre support 3, 4, 5 peut notamment comporter des guides 85 de passage et de maintien de câbles électriques 80a, 80b, 80c. Ces guides 85 peuvent avoir une forme en crochet et permettent un passage optimisé et un bon maintien des câbles électriques 80a, 80b, 80c le long de l'au moins un cadre support 3, 4, 5. ces guides 85 peuvent par exemple venir de matière avec l'au moins un cadre support 3, 4, 5 ou bien être des éléments rapportés.

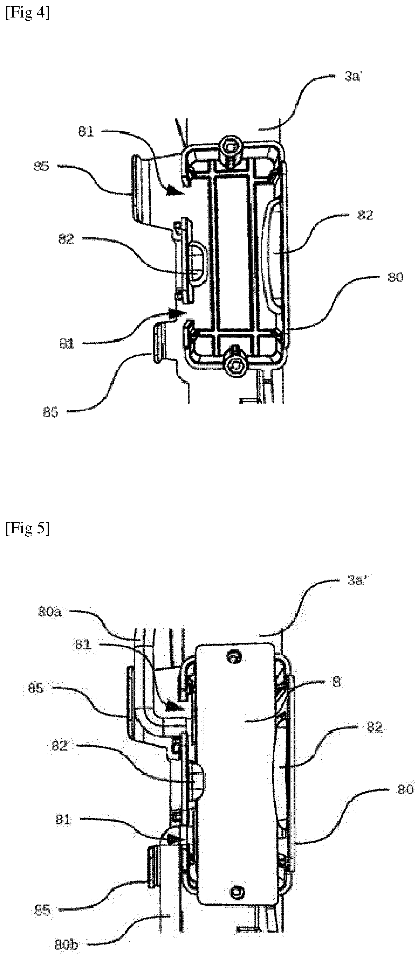

Comme le montrent les figures 4 et 5, l'au moins un cadre support 3, 4, 5, ici un montant latéral 3a', peut comporter des parois 80 faisant saillies dudit au moins un cadre support 3, 4, 5. Ces parois 80 délimitent un logement de réception du module de contrôle 8 dans lequel ledit module de contrôle 8 est inséré. Les parois 80 peuvent notamment comporter des encoches 81 de passage de câbles électriques 80a, 80b, 80c. De plus, les parois 80 peuvent comporter des renflements 82 chevauchant le module de contrôle 8 de sorte à maintenir ce dernier au sein du logement de réception.

Ainsi, on voit bien que le dispositif d'obturation 1 du fait de la présence du module de contrôle fixé directement sur ce dernier permet un montage plus aisé au sein du véhicule automobile.

## Revendications

1. Dispositif d'obturation (1) pour entrée d'air de face avant de véhicule automobile comprenant :
- au moins un cadre support (3, 4, 5) présentant deux montants latéraux (3a, 3a', 4a, 4a', 5a, 5a') reliant deux traverses d'extrémité (3b, 4b, 3b', 4b', 5b ; 5b'), ledit cadre support (3, 4, 5) délimitant une ouverture,
- au moins un volet (6) disposé au sein de l'ouverture du au moins un cadre support (3, 4, 5) et pivotant autour d'un axe de pivotement entre une première position extrémale ouverte et une deuxième position extrémale fermée, ledit au moins un volet (6) étant mis en rotation par au moins dispositif d'entraînement (7) comportant un actionneur électrique (7a),
**caractérisé en ce qu'**il comporte un module de contrôle (8) fixé sur l'au moins un cadre support (3, 4, 5), ledit module de contrôle (8) étant connecté électriquement d'une part à l'au moins un actionneur électrique (7a) et d'autre part à une source électrique et **en ce qu'**il comporte un premier (4) et un deuxième (5) cadre support, ledit premier (4) et ledit deuxième (5) cadre support comportant chacun un actionneur électrique (7a) propre, et **en ce que** ledit module de contrôle (8) du dispositif d'obturation (1) est un unique module de contrôle (8) connecté électriquement d'une part à chaque actionneur électrique (7a) et d'autre part à une source électrique.

2. Dispositif d'obturation (1) selon la revendication précédente, **caractérisé en ce que** l'au moins un actionneur électrique (7a) et le module de contrôle (8) sont fixés sur un même côté du au moins un cadre support (3, 4, 5).

3. Dispositif d'obturation (1) selon la revendication précédente, **caractérisé en ce que** l'au moins un actionneur électrique (7a) et le module de contrôle (8) sont fixés sur un montant latéral (3a, 3a', 4a, 4a', 5a, 5a').

4. Dispositif d'obturation (1) selon l'une quelconque des revendications précédentes, **caractérisé en ce que** l'au moins un cadre support (3, 4, 5) comporte des parois (80) faisant saillies dudit au moins un cadre support (3, 4, 5) et délimitant un logement de réception du module de contrôle (8).

5. Dispositif d'obturation (1) selon la revendication précédente, **caractérisé en ce que** les parois (80) comportent des encoches (81) de passage de câbles électriques (80a, 80b, 80c).

6. Dispositif d'obturation (1) selon l'une quelconque des revendications 4 ou 5, **caractérisé en ce que** les parois (80) comportent des renflements (82) chevauchant le module de contrôle (8) de sorte à maintenir ledit module de contrôle (8) au sein du logement de réception.

7. Dispositif d'obturation (1) selon l'une quelconque des revendications précédentes, **caractérisé en ce que** le module de contrôle (8) est vissé sur l'au moins un cadre support (3, 4, 5).

8. Dispositif d'obturation (1) selon l'une quelconque des revendications précédentes, **caractérisé en ce que** l'au moins un cadre support (3, 4, 5) comporte des guides (85) de passage et de maintien de câbles électriques (80a, 80b, 80c).

9. Dispositif d'obturation (1) selon l'une quelconque des revendications précédentes, **caractérisé en ce que** le module de contrôle (8) est un convertisseur de puissance, ou un onduleur ou encore une unité de contrôle.

## Patentansprüche

1. Verschlussvorrichtung (1) für einen Lufteinlass an der Fahrzeugfront, umfassend:
mindestens einen Tragrahmen (3, 4, 5) mit zwei seitlichen Pfosten (3a, 3a', 4a, 4a', 5a, 5a'), die zwei Endquerstreben (3b, 4b, 3b', 4b', 5b; 5b') verbinden, wobei der Tragrahmen (3, 4, 5) eine Öffnung begrenzt,
mindestens eine Klappe (6), die innerhalb der Öffnung des mindestens einen Tragrahmens (3, 4, 5) angeordnet ist und um eine Schwenkachse zwischen einer ersten offenen Endposition und einer zweiten geschlossenen Endposition schwenkt, wobei die mindestens eine Klappe (6) durch mindestens eine Antriebsvorrichtung (7) gedreht wird, die einen elektrischen Aktuator (7a) umfasst, **dadurch gekennzeichnet, dass** sie ein Steuermodul (8) umfasst, das an dem mindestens einen Tragrahmen (3, 4, 5) befestigt ist, wobei das Steuermodul (8) einerseits elektrisch mit dem mindestens einen elektrischen Aktuator (7a) und andererseits mit einer elektrischen Quelle verbunden ist, und dadurch, dass sie einen ersten (4) und einen zweiten (5) Tragrahmen umfasst, wobei der erste (4) und der zweite (5) Tragrahmen jeweils einen eigenen elektrischen Aktuator (7a) umfassen, und dadurch, dass das Steuermodul (8) der Verschlussvorrichtung (1) ein einziges Steuermodul (8) ist, das einerseits elektrisch mit jedem elektrischen Aktuator (7a) und andererseits mit einer elektrischen Quelle verbunden ist.

2. Verschlussvorrichtung (1) nach dem vorhergehenden Anspruch, **dadurch gekennzeichnet, dass** der mindestens eine elektrische Aktuator (7a) und das Steuermodul (8) an derselben Seite des mindestens einen Tragrahmens (3, 4, 5) befestigt sind.

3. Verschlussvorrichtung (1) nach dem vorhergehenden Anspruch, **dadurch gekennzeichnet, dass** der mindestens eine elektrische Aktuator (7a) und das Steuermodul (8) an einem seitlichen Pfosten (3a, 3a', 4a, 4a', 5a, 5a') befestigt sind.

4. Verschlussvorrichtung (1) nach einem der vorhergehenden Ansprüche, **dadurch gekennzeichnet, dass** der mindestens eine Tragrahmen (3, 4, 5) Wände (80) umfasst, die von dem mindestens einen Tragrahmen (3, 4, 5) vorstehen und ein Aufnahmegehäuse für das Steuermodul (8) begrenzen.

5. Verschlussvorrichtung (1) nach dem vorhergehenden Anspruch, **dadurch gekennzeichnet, dass** die Wände (80) Kerben (81) für den Durchgang von elektrischen Kabeln (80a, 80b, 80c) umfassen.

6. Verschlussvorrichtung (1) nach einem der Ansprüche 4 oder 5, **dadurch gekennzeichnet, dass** die Wände (80) Ausbuchtungen (82) umfassen, die das Steuermodul (8) überlappen, um das Steuermodul (8) innerhalb des Aufnahmegehäuses zu halten.

7. Verschlussvorrichtung (1) nach einem der vorhergehenden Ansprüche, **dadurch gekennzeichnet, dass** das Steuermodul (8) an dem mindestens einen Tragrahmen (3, 4, 5) verschraubt ist.

8. Verschlussvorrichtung (1) nach einem der vorhergehenden Ansprüche, **dadurch gekennzeichnet, dass** der mindestens eine Tragrahmen (3, 4, 5) Führungen (85) für den Durchgang und die Halterung von elektrischen Kabeln (80a, 80b, 80c) umfasst.

9. Verschlussvorrichtung (1) nach einem der vorhergehenden Ansprüche, **dadurch gekennzeichnet, dass** das Steuermodul (8) ein Leistungswandler oder ein Wechselrichter oder eine Steuereinheit ist.

## Claims

1. A closure device (1) for a vehicle front end air intake comprising:
at least one support frame (3, 4, 5) having two lateral uprights (3a, 3a', 4a, 4a', 5a, 5a') connecting two end cross-members (3b, 4b, 3b', 4b', 5b; 5b'), said support frame (3, 4, 5) defining an opening,
at least one flap (6) arranged within the opening of the at least one support frame (3, 4, 5) and pivoting about a pivot axis between a first open extreme position and a second closed extreme position, said at least one flap (6) being rotated by at least one drive device (7) comprising an electric actuator (7a), **characterized in that** it comprises a control module (8) fixed on the at least one support frame (3, 4, 5), said control module (8) being electrically connected on the one hand to the at least one electric actuator (7a) and on the other hand to an electrical source, and **in that** it comprises a first (4) and a second (5) support frame, said first (4) and said second (5) support frame each comprising its own electric actuator (7a), and **in that** said the control module (8) of the closure device (1) is a single control module (8) electrically connected on the one hand to each electric actuator (7a) and on the other hand to an electrical source.

2. The closure device (1) according to the preceding claim, **characterized in that** the at least one electric actuator (7a) and the control module (8) are fixed on the same side of the at least one support frame (3, 4, 5).

3. The closure device (1) according to the preceding claim, **characterized in that** the at least one electric actuator (7a) and the control module (8) are fixed on a lateral upright (3a, 3a', 4a, 4a', 5a, 5a').

4. The closure device (1) according to any one of the preceding claims, **characterized in that** the at least one support frame (3, 4, 5) comprises walls (80) protruding from said at least one support frame (3, 4, 5) and defining a reception housing for the control module (8).

5. The closure device (1) according to the preceding claim, **characterized in that** the walls (80) comprise notches (81) for the passage of electrical cables (80a, 80b, 80c).

6. The closure device (1) according to any one of claims 4 or 5, **characterized in that** the walls (80) comprise bulges (82) overlapping the control module (8) so as to hold said control module (8) within the reception housing.

7. The closure device (1) according to any one of the preceding claims, **characterized in that** the control module (8) is screwed onto the at least one support frame (3, 4, 5).

8. The closure device (1) according to any one of the preceding claims, **characterized in that** the at least one support frame (3, 4, 5) comprises guides (85) for the passage and retention of electrical cables (80a, 80b, 80c).

9. The closure device (1) according to any one of the preceding claims, **characterized in that** the control module (8) is a power converter, or an inverter, or a control unit.
